# EUROPEAN PATENT APPLICATION

(11) **EP 4 613 106 A1**
(43) Date of publication of application: **10.09.2025**
(21) Application number: 25161239.6
(22) Date of filing: 03.03.2025
(51) Int. Cl.: A23L 2/66, A23L 11/65, A23P 30/40, A23C 11/06

(54) **PLANT MILK FOR FOAMING AND METHOD FOR PRODUCING PLANT MILK FOR FOAMING**

(30) Priority: 05.03.2024 JP 2024033322
(71) Applicant: Fuji Oil Holdings Inc., Izumisano-shi, Osaka 598-8540 (JP)
(72) Inventor: KANO, Hiroshi, Osaka, 598-8540 (JP); YANAGISAWA, Masanobu, Osaka, 598-8540 (JP)
(74) Representative: Dennemeyer & Associates S.A.

(57) **Abstract**

Provided is a plant milk for foaming that includes a plant milk and a protein material having the following properties (A) and (B). (A) after a 20 mass% aqueous solution of the protein material in terms of crude protein contained in the protein material is heated at 80°C for 30 minutes, the aqueous solution has a viscosity of less than 100,000 mPa·s at 25°C. (B) the protein material has a 0.22 M TCA solubilization rate of 10% to 95%.

## Description

### BACKGROUND

### 1. Technical Field

The present disclosure relates to a plant milk for foaming and a method for producing the plant milk for foaming.

### 2. Related Art

Due to climate change represented by global warming, growing influence on purchasing by environmentally conscious millennials and later generations, awareness of animal welfare, and health issues such as cholesterol accumulation in a body when using animal protein, there is a growing movement to adopt plant milk represented by soy milk or the like as a milk substitute. However, the plant milk is inferior in foaming stability to a milk. Therefore, even if the plant milk is added to foamed coffee, there is a problem that foam easily disappears.

As a method of imparting foaming property, techniques using emulsifiers or stabilizers are known. For example, a method of adding various emulsifiers or foaming proteins to the milk to prepare a foaming-type beverage (JP-A-H10-295339) has been disclosed. Similarly, a method of adding an emulsifier having an HLB of 14 or more (JP-A-2009-050259) and a method of adding casein, soy protein, microcrystalline cellulose, or carrageenan (JP-A-S60-087775) have been disclosed.

As a technique for using an emulsifier or stabilizer in nut milk instead of the milk, for example, a technique of blending high acyl gellan gum, gum arabic, or guar gum has been disclosed (JP-T-2019-512211).

However, the technique disclosed in JP-T-2019-512211 is a technique related to improving mouthfeel. No technique related to the foaming property is disclosed.

Further, a technique of blending sucrose fatty acid esters, glycerin fatty acid esters, or organic acid monoglycerin with an HLB of 8 or more into the soy milk in order to improve the foaming property of the soy milk has been disclosed (Japanese Patent No. 6390071).

However, the technique disclosed in Japanese Patent No. 6390071 is a technology specialized in emulsifiers. No technique related to foaming property other than emulsifiers is disclosed.

### SUMMARY

A plant milk for foaming according to the present embodiment includes a plant milk and a protein material having the following properties (A) and (B). (A) after a 20 mass% aqueous solution of the protein material in terms of crude protein contained in the protein material is heated at 80°C for 30 minutes, the aqueous solution has a viscosity of less than 100,000 mPa·s at 25°C. (B) the protein material has a 0.22 M TCA solubilization rate of 10% to 95%.

### DETAILED DESCRIPTION

In the following detailed description, for purpose of explanation, numerous specific details are set forth in order to provide a thorough understanding of the disclosed embodiments. It will be apparent, however, that one or more embodiments may be practiced without these specific details.

An object of the present embodiment is to provide a foamed plant milk having good foaming property and foaming stability by foaming with a whisk or the like. Another object of the present embodiment is to provide a plant milk for foaming that is used for foaming.

The present developers conducted extensive research into solving the above problems. As a result, it was found that the foamed plant milk obtained by foaming the plant milk prepared using a protein material having specific properties has good foaming property and foaming stability. This led to completion of the plant milk of the present embodiment.

That is, a plant milk for foaming according to the present embodiment is a plant milk for foaming according to (1) to (4) described below.
(1) A plant milk for foaming including a plant milk and a protein material having the following properties (A) and (B):
   (A) after a 20 mass% aqueous solution of the protein material in terms of crude protein contained in the protein material is heated at 80°C for 30 minutes, the aqueous solution has a viscosity of less than 100,000 mPa·s at 25°C; and
   (B) the protein material has a 0.22 M TCA solubilization rate of 10% to 95%.
(2) The plant milk for foaming according to (1), in which the viscosity is 10,000 mPa·s or less in the property (A).
(3) The plant milk for foaming according to (1), in which the 0.22 M TCA solubilization rate of the protein material is 30% to 95% in the property (B).
(4) The plant milk for foaming according to (1), in which the viscosity is 10,000 mPa·s or less in the property (A), and the 0.22 M TCA solubilization rate of the protein material is 30% to 95% in the property (B).
   A plant milk beverage according to the present embodiment in a plant milk beverage according to (5) described below.
(5) A plant milk beverage having foamed plant milk prepared by foaming the plant milk for foaming according to any one of (1) to (4) described above placed on top of the plant milk beverage.
   A method for producing a plant milk for foaming according to the present embodiment is a method for producing a plant milk for foaming according to (6) described below.
(6) A method for producing a plant milk for foaming, the method including emulsifying a plant milk and a raw material containing a protein material having the following properties (A) and (B):
   (A) after a 20 mass% aqueous solution of the protein material in terms of crude protein contained in the protein material is heated at 80°C for 30 minutes, the aqueous solution has a viscosity of less than 100,000 mPa·s at 25°C; and
   (B) the protein material has a 0.22 M TCA solubilization rate of 10% to 95%.
      A method for producing a foamed plant milk according to the present embodiment is a method for producing a foamed plant milk according to (7) described below.
(7) A method for producing a foamed plant milk, the method including foaming the plant milk for foaming according to any one of (1) to (4) described above.
   A method for foaming a plant milk according to the present embodiment is a method for foaming a plant milk according to (8) described below.
(8) A method for foaming a plant milk, the method including foaming the plant milk for foaming according to any one of (1) to (4) described above.

According to the present embodiment, it is possible to provide the foamed plant milk having good foaming property and foaming stability, and the plant milk for foaming that is used for foaming.

### (Plant milk for foaming)

The plant milk for foaming according to the present embodiment refers to a plant milk used for foaming (whisking) with a steamer, a whisk, or the like.

The plant milk for foaming according to the present embodiment contains a protein material having the following properties (A) and (B).
(A) after a 20 mass% aqueous solution of the protein material in terms of crude protein contained in the protein material is heated at 80°C for 30 minutes, the aqueous solution has a viscosity of less than 100,000 mPa·s at 25°C; and
(B) the protein material has a 0.22 M TCA solubilization rate of 10% to 95%.

The foamed plant milk obtained by foaming the plant milk for foaming according to the present embodiment with a steamer, a whisk, or the like has excellent foaming property and foaming stability.

### (Plant milk)

The plant milk for foaming according to the present embodiment contains the plant milk. The plant milk used in the present embodiment refers to a milk prepared by extracting components contained in a plant as a raw material with an aqueous solvent. Specific examples include milks based on raw materials derived from beans, nuts, or grains. For the plant milk for foaming according to the present embodiment, an aqueous solvent extract (aqueous solution) can be used as it is. Further, a concentrated aqueous solvent extract obtained by removing a portion of water from the aqueous solvent extract can also be used. Furthermore, an aqueous solvent extract that has been dried once can also be used by dispersing it in water.

In addition, as milk (bean milk) based on beans, slurry-like bean milk prepared by finely grinding okara (bean curd refuse) without removing the okara from the bean milk can also be used.

Examples of the beans include soybeans, lupin beans, mung beans, adzuki beans, broad beans, peas, chickpeas, kidney beans, lentil beans, lentils, and cowpeas. Further, examples of the nuts include sesame, canola, coconuts, almonds, walnuts, cashew nuts, and hazelnuts. Furthermore, examples of the grains include corn, buckwheat, wheat, barley, oats, and rice.

Preferred examples include soybeans, mung beans, broad beans, peas, chickpeas, coconuts, almonds, and oats.

Examples of the plant milk include soy milk, low-fat soy milk, pea milk, mung bean milk, oat milk, almond milk, and coconut milk.

### (Protein material)

The protein material used in the present embodiment has a low viscosity after heating (hereinafter referred to as viscosity after heating). In measuring the viscosity after heating, first, a protein material aqueous solution is prepared so that concentration of crude protein contained in the protein material is 20 mass%. Subsequently, the prepared aqueous solution is heated at 80°C for 30 minutes. Thereafter, viscosity of the aqueous solution after heating is measured at 25°C. In this way, the viscosity after heating can be measured. The viscosity after heating is less than 100,000 mPa·s, preferably 10,000 mPa·s or less, 5,000 mPa·s or less, 1,000 mPa·s or less, or 500 mPa·s or less, and more preferably 200 mPa·s or less, or 100 mPa·s or less.

Further, the protein material used in the present embodiment has a molecular weight of a certain size. The molecular weight is defined by the TCA solubilization rate. In the present embodiment, the TCA solubilization rate is defined as a ratio of mass of crude protein that dissolves in 0.22 M TCA to mass of total crude protein. The TCA solubilization rate of this protein material can be set to 10 to 95%, and preferably 30 to 95%, 35 to 90%, 40 to 85%, 45 to 80%, or 50 to 80%. When the TCA solubilization rate is too low, the viscosity after heating tends to increase. Therefore, the TCA solubilization rate that is too low may not be appropriate. In addition, when the TCA solubilization rate is too low, transmittance may decrease.

On the other hand, when the TCA solubilization rate is too high, an amount of protein that contributes to emulsifying properties decreases. As a result, it is necessary to blend a large amount of protein material. Therefore, a degree of freedom in blending may be reduced.

The protein material used in the present embodiment preferably has a nitrogen solubility index (an NSI) of 80 or more. Here, the NSI is an index indicating solubility of a protein. More preferably, the protein material having an NSI of 85 or more, 90 or more, 95 or more, or 97 or more is used. A high NSI of the protein material indicates that the protein material is highly dispersible in water. Therefore, the high NSI can contribute to dispersion stability of an oil-in-water emulsion composition used in the present embodiment. Further, the crude protein content in the protein material can be preferably set to 30 mass% or more, and more preferably 35 mass% or more, 40 mass% or more, 45 mass% or more, 50 mass% or more, 55 mass% or more, 60 mass% or more, 65 mass% or more, or 70 mass% or more. The protein material having a higher crude protein content can exhibit a desired function in a smaller amount.

An example of such a protein material is "MIRA-MAP2.0" produced by FUJI OIL CO., LTD.

Origin of the protein material used in the above preparation is not particularly limited. Proteins derived from plant, animal, or microorganisms can be used. Examples of plant proteins include proteins derived from beans including soybeans, peas, mung beans, lupin beans, chickpeas, kidney beans, lentil beans, and cowpeas, seeds including sesame seeds, canola seeds, coconut seeds, and almond seeds, grains including corn, buckwheat, wheat, and rice, vegetables, fruits, algae, and microalgae. As an example, when soybean-derived protein is used as the protein material, a protein material prepared by concentrating and processing protein contained in soybean raw materials such as defatted soybeans or whole soybeans is used. In general, examples of the protein material conceptually include isolated soybean protein, concentrated soybean protein, powdered soy milk, and protein materials obtained by processing them in various ways.

Examples of animal proteins include egg proteins containing egg white albumin, milk proteins including casein, whey, and lactalbumin, proteins derived from blood including plasma, serum albumin, and decolorized hemoglobin, proteins derived from livestock meat, and proteins derived from seafood. Furthermore, proteins derived from microorganisms including yeast, mold, and bacteria can be used. Even from proteins that are poorly soluble in water, a protein material that can be used in the present embodiment can be prepared by treatment described below.

In one aspect, a plant-based oil-in-water emulsion is produced. Therefore, the plant proteins can be preferably used as the protein material in the present embodiment.

### (Denaturation and molecular weight adjustment treatment)

The protein material used in the oil-in-water emulsion produced in the present embodiment is obtained by applying a combination of a "decomposition/denaturation treatment" for decomposing and/or denaturing proteins and a "molecular weight distribution adjustment treatment" for adjusting molecular weight distribution of proteins. Examples of the above-mentioned "decomposition/denaturation treatment" include enzyme treatment, pH adjustment treatment (for example, acid treatment, alkali treatment), denaturing agent treatment, heating treatment, cooling treatment, high pressure treatment, organic solvent treatment, mineral addition treatment, supercritical treatment, ultrasonic treatment, electrolysis treatment, and combinations of these treatments. Examples of the above-mentioned "molecular weight distribution adjustment treatment" include filtration, gel filtration, chromatography, centrifugation, electrophoresis, dialysis, and combinations of these treatments. Order and number of times of the "decomposition/denaturation treatment" and the "molecular weight distribution adjustment treatment" are not particularly limited. The "molecular weight distribution adjustment treatment" can be performed after the "decomposition/denaturation treatment". Alternatively, the "decomposition/denaturation treatment" can be performed after the "molecular weight distribution adjustment treatment". Furthermore, both treatments may be performed simultaneously. In addition, for example, the "decomposition/denaturation treatment" can also be performed between two or more "molecular weight distribution adjustment treatments". Alternatively, the "molecular weight distribution adjustment treatment" can also be performed between two or more "decomposition/denaturation treatments". Furthermore, each of the "decomposition/denaturation treatment" and the "molecular weight distribution adjustment treatment" can be performed multiple times in any order. When a desired molecular weight distribution is obtained by the "decomposition/denaturation treatment", the "molecular weight distribution adjustment treatment" does not need to be performed. When performing these treatments multiple times in combination, all the treatments from the raw material can be performed continuously. Alternatively, the above treatments can be performed multiple times with a time interval. For example, a commercially available product that has undergone a certain treatment as the raw material may be subjected to another treatment. Note that as long as the above characteristics are satisfied, a specific protein material may be prepared by mixing a protein material that has undergone the molecular weight distribution adjustment treatment with a protein material that has not undergone the molecular weight distribution adjustment treatment. In this case, a ratio of the two (protein material that has undergone treatment: protein material that has not undergone treatment) can be appropriately adjusted within a range that satisfies the above characteristics. Examples of range of the ratio of the two include 1:99 to 99:1, 50:50 to 95:5, and 75:25 to 90:10. In one embodiment, the protein material used in the oil-in-water emulsion contains a protein material that has undergone the "decomposition/denaturation treatment" and the "molecular weight distribution adjustment treatment".

Conditions for protein decomposition/denaturation treatment, such as enzymes, pH, organic solvents, minerals, component concentrations, temperature, pressure, output strength, current, and time, can be appropriately set by those skilled in the art. When an enzyme is used, examples of the enzyme used include proteases classified as "metal proteases", "acid proteases", "thiol proteases", or "serine proteases". Reaction can be carried out at a reaction temperature of 20 to 80°C, and preferably 40 to 60°C. In the case of pH adjustment treatment, the treatment can be carried out in a pH range having upper and lower limits selected from, for example, pH 2, 2.5, 3, 3.5, 4, 4.5, 5, 5.5, 6, 6.5, 7, 7.5, 8, 8.5, 9, 9.5, 10, 10.5, 11, 11.5, and 12. For example, the treatment can be carried out in a range of pH 2 to 12. The acid treatment may be a method of adding an acid or a method of performing a fermentation treatment such as lactic acid fermentation. Examples of acids to be added include inorganic acids including hydrochloric acid and phosphoric acid, and organic acids including acetic acid, lactic acid, citric acid, gluconic acid, phytic acid, sorbic acid, adipic acid, succinic acid, tartaric acid, fumaric acid, malic acid, and ascorbic acid. Further, acid-containing foods and beverages including fruit juice including lemon juice, concentrated fruit juice, fermented milk, yogurt, and brewed vinegar may be used to add the acid. In the case of alkali treatment, for example, sodium hydroxide or potassium hydroxide can be added as the alkali. In the case of denaturing agent treatment, guanidine hydrochloride, urea, arginine, or PEG can be added as a denaturing agent. In the case of heating treatment or cooling treatment, examples of heating temperatures include 60°C, 70°C, 80°C, 90°C, 100°C, 110°C, 120°C, 125°C, 130°C, 135°C, 140°C, 145°C, and 150°C. The treatment can be performed in a temperature range having upper and lower limits appropriately selected from these temperatures, for example, 60°C to 150°C. Examples of cooling temperatures include -10°C, -15°C, -20°C, -25°C, -30°C, -35°C, -40°C, -45°C, -50°C, - 55°C, -60°C, -65°C, -70°C, and -75°C. The treatment can be performed in a temperature range having upper and lower limits appropriately selected from these temperatures, for example, -10°C to -75°C. Examples of heating or cooling times include 5 seconds, 10 seconds, 30 seconds, 1 minute, 5 minutes, 10 minutes, 20 minutes, 30 minutes, 40 minutes, 50 minutes, 60 minutes, 70 minutes, 80 minutes, 90 minutes, 100 minutes, 120 minutes, 150 minutes, 180 minutes, and 200 minutes. The treatment can be performed for a range of times having upper and lower limits appropriately selected from these times, for example, 5 seconds to 200 minutes. In the case of high pressure treatment, examples of pressure conditions include 100MPa, 200MPa, 300MPa, 400MPa, 500MPa, 600MPa, 700MPa, 800MPa, 900MPa, and 1,000MPa. The treatment can be performed in a range of pressures having upper and lower limits appropriately selected from these pressures, for example, 100MPa to 1,000MPa. In the case of organic solvent treatment, examples of the solvent used include alcohols and ketones, and more specifically ethanol and acetone. In the case of mineral addition treatment, examples of the mineral used include divalent metal ions including calcium and magnesium. In the case of supercritical treatment, the treatment can be performed, for example, using carbon dioxide in a supercritical state having a temperature of about 30°C or higher and a pressure of about 7MPa or higher. In the case of ultrasonic treatment, the treatment can be performed, for example, by irradiating ultrasonic waves with a frequency of 100 KHz to 2 MHz and an output of 100 to 1,000 W. In the case of electrolysis treatment, the treatment can be performed, for example, by applying a voltage of 100 mV to 1,000 mV to an aqueous protein solution. In a specific embodiment, treatment for decomposing and/or denaturing the protein is selected from the denaturing agent treatment, the heating treatment, and a combination thereof.

Those skilled in the art can appropriately set treatment conditions for adjusting the molecular weight distribution of the proteins, for example, the type of filter media, gel filtration carrier, centrifugation rotation speed, current, and time. Examples of the filter media include filter paper, filter cloth, diatomaceous earth, ceramic, glass, and membrane. Examples of the gel filtration carrier include dextran and agarose. Examples of centrifugation conditions include 1,000 to 3,000×g and 5 to 20 minutes.

A blending amount of the protein material used in the present embodiment is preferably 0.01 to 5 mass%, and more preferably 0.01 to 4 mass% in the plant milk for foaming. More preferably, the blending amount can be set to 0.01 to 3 mass%, 0.01 to 2 mass%, 0.01 to 1 mass%, 0.03 to 3 mass%, 0.03 to 2 mass%, or 0.03 to 1 mass%.

### (Crude protein content)

The crude protein content is measured by the Kjeldahl method. Specifically, mass of nitrogen measured by the Kjeldahl method is expressed, relative to weight of the protein material, as "mass%" as the crude protein content in dry protein material. Note that nitrogen conversion coefficient is set to 6.25. Basically, a measurement value is calculated by rounding off the value to two decimal places.

### (NSI)

60 ml of water is added to 3 g of sample. The resulting mixture is stirred with a propeller at 37°C for 1 hour. Thereafter, the stirred mixture is centrifuged at 1400×g for 10 minutes. Supernatant (I) is collected. Subsequently, 100 ml of water is added again to remaining precipitate. After another propeller stirring at 37°C for 1 hour, centrifugation is performed. Supernatant (II) is collected. The supernatants (I) and (II) are mixed. Water is added to the mixture until a total volume of the mixture is 250 ml. Then, the mixture is filtered through filter paper (No. 5). Thereafter, nitrogen content of filtrate is measured by the Kjeldahl method. At the same time, the nitrogen content of the sample is measured by the Kjeldahl method. A value representing a ratio of an amount of nitrogen (water soluble nitrogen) recovered from the filtrate to a total amount of nitrogen in the sample as mass% is defined as the NSI. Basically, the measurement value is calculated by rounding off the value to two decimal places.

### (TCA solubilization rate)

An equal amount of 0.44 M trichloroacetic acid (TCA) is added to a 2 mass% aqueous solution of protein material. This prepares a 0.22 M TCA solution. A ratio of soluble nitrogen is defined as a value measured by the Kjeldahl method. Basically, the measurement value is calculated by rounding off the value to two decimal places.

### (Viscosity (Viscosity after heating))

The viscosity of the protein material is measured using a B-type viscometer (type BM manufactured by Toki Sangyo Co., Ltd.). The protein material aqueous solution is prepared so that the concentration of crude protein contained in the protein material is 20 mass%. A rotor is set in a measurement container filled with the prepared aqueous solution. Thereafter, the sealed measurement container is heated in a hot water bath at 80°C for 30 minutes. Subsequently, the viscosity of the aqueous solution in the measurement container is measured at an appropriate rotation speed at 25°C. The viscosity (unit: Pa·s) is calculated by multiplying a read viscometer pointer value by a conversion multiplier corresponding to a rotor number and rotation speed. A value obtained from the pointer value one minute after the start of measurement is defined as a measurement value. Basically, the rotation speed is set to 60 rpm. When measuring a high-viscosity sample, the rotor number is changed from 1 to 4. At the same time, the rotation speed is reduced to 6 rpm. Note that an upper limit of viscosity for this measurement is 100,000 mPa·s. When the pointer value exceeds a measurement range under conditions of rotor No. 4 and the rotation speed of 6 rpm, the viscosity after heating is immediately determined to be 100,000 mPa·s or higher.

### (Fats and oils)

Fats and oils can be added to the plant milk for foaming according to the present embodiment. The fats and oils to be added may be any fats and oils as long as they are edible fats and oils. Examples of the fats and oils to be added include: plant fats and oils including corn oil, soybean oil, sesame oil, rice oil, safflower oil, cottonseed oil, sunflower oil, rapeseed oil, coconut oil, palm oil, palm kernel oil, olive oil, peanut oil, almond oil, avocado oil, hazelnut oil, walnut oil, and perilla oil; animal fats and oils including milk fat, beef tallow, lard, whale oil, fish oil, and chicken oil; and fats and oils derived from microorganisms including yeast, mold, and bacteria. When the plant fats and oils are used, the physical properties of the fats and oils can be easily controlled, and by using plant components as all the components, the plant milk for foaming can be prepared. Therefore, the plant fats and oils are preferred. Further, each of the above fats and oils can be used alone. Alternatively, a mixture of these fats and oils can be used. Alternatively, processed fats and oils obtained by processing these fats and oils, for example by hardening, fractionation, or interesterification can also be used.

Addition of the fats and oils tends to increase richness of the plant milk for foaming. The addition of the fats and oils also tends to improve mouthfeel of the plant milk for foaming. A blending amount of the fats and oils can preferably be set to 0.01 to 6 mass%, more preferably 0.1 to 5 mass%, and still more preferably 0.5 to 5 mass%, or 1 to 5 mass% in the plant milk for foaming.

The plant milk for foaming according to the present embodiment can be appropriately added with, for example, fruit juice, fruit pulp, vegetables, sugars, fats and oils, dairy products, grain flours, starches, cocoa mass, emulsifiers, minerals, vitamins, thickening stabilizers, acidulants, or flavorings.

### (Method for producing plant milk for foaming)

An example of a method for producing the plant milk for foaming according to the present embodiment is described below.

The plant milk and the protein material having the following properties (A) and (B) are emulsified.
(A) After a 20 mass% aqueous solution of the protein material in terms of crude protein contained in the protein material is heated at 80°C for 30 minutes, the aqueous solution has a viscosity of less than 100,000 mPa·s at 25°C.
(B) The protein material has a 0.22 M TCA solubilization rate of 10% to 95%.

If necessary, obtained emulsion is homogenized in a homogenizing machine. Thereafter, the emulsion is sterilized if necessary. Thus, the plant milk for foaming according to the present embodiment can be obtained.

Further, for example, fats and oils, fruit juice, fruit pulp, vegetables, sugars, dairy products, grain flours, starches, cocoa mass, emulsifiers, minerals, vitamins, thickening stabilizers, acidulants, or flavorings can be used as appropriate.

An emulsification method is not particularly limited. The plant milk and the protein material can be emulsified, for example, using a homomixer or a homogenizer. If necessary, the obtained emulsion can be homogenized, for example, using the homogenizer. A homogenizing pressure of the homogenizing machine is not particularly limited as long as it is sufficient for emulsification.

### (Sterilization)

The plant milk for foaming according to the present embodiment may be sterilized as necessary. A sterilization method is not particularly limited. Examples of the sterilization method include direct heating methods including injection of high-temperature, high-pressure water into a raw material liquid, injection of high-pressure steam into the raw material liquid, Joule heating by energizing the raw material liquid, and heating by high frequency waves (microwaves), as well as indirect heating methods including electromagnetic induction heating, electric furnaces, direct flames, fluidized sand baths, and molten salt baths. Each of these sterilization methods can be used alone. Alternatively, several of these sterilization methods can be used in combination.

Further, the plant milk for foaming after sterilization can be homogenized again in the homogenizer.

### (Foaming)

The plant milk for foaming according to the present embodiment can be foamed, for example, with a steamer or a whisk. Thus, the foamed plant milk can be obtained. Further, the plant milk for foaming is put into an espuma siphon together with nitrous oxide gas or carbon dioxide gas. Thereafter, the sealed espuma siphon is vibrated by shaking. Thereafter, the contents are squeezed out of the espuma siphon into a container. Foaming can also be performed in this way. The foamed plant milk in a foamed form can be used for various beverages. Examples of such beverages include coffee, black tea, and cocoa.

Taking coffee as an example, the plant milk for foaming according to the present embodiment can be foamed, for example, with a whisk. The foamed plant milk can be added to coffee. In this way, a cappuccino-like beverage can be prepared. This cappuccino-like beverage has excellent foaming property and foaming stability, and has a good flavor.

### Examples

The present embodiment will be described with reference to the following examples and comparative examples. In the examples and comparative examples, "parts" means "parts by mass" unless otherwise specified. Similarly, "%" means "mass%".

### (Examples 1 to 5, Comparative Example 1)

Based on the formulation in Table 1, raw materials were mixed by a homomixer (manufactured by PRIMIX Corporation). The resulting mixture was homogenized at 15MPa in a homogenizer (manufactured by SPX FLOW, Inc.). Thus, the soy milk for foaming was obtained. Note that as the protein material, "MIRA-MAP2.0" (produced by FUJI OIL CO., LTD., crude protein content 79.3%, TCA solubilization rate 61.8%, viscosity after heating 28 mPa·s, NSI 98.1) was used. As the soy milk (plant milk), "plain soy milk" (produced by Kikkoman Corporation, protein content: 4.15%) was used. Further, as the plant fats and oils, edible rice oil (produced by FUJI OIL CO., LTD.) was used.

150g of each soy milk for foaming was put into a milk foamer (stainless steel double mesh milk foamer DIY fancy coffee creamer, 400ml). The milk foamer was shaken up and down 20 times. In this way, foamed soy milk was obtained.

### (Evaluation of foaming property and foaming stability)

The foamed soy milk was immediately put into a 200 ml tall beaker. A foam height of the contents of the tall beaker was measured 1 minute and 10 minutes after end of shaking with the milk foamer. The foam height after 1 minute (first foam height) was defined as an index of foaming property. The foaming stability was evaluated by a percentage (%) calculated by dividing the foaming height after 10 minutes (second foam height) by the first foam height.

When the index of foaming property (first foam height) was 44 mm or more and the foaming stability was 65% or more, the measured foamed soy milk was judged to pass. The foaming property is preferably 45 mm or more, and more preferably 47 mm or more. The foaming stability is preferably 66% or more, and more preferably 67% or more.

### (Table 1)

**Table 1**

| **Formulation (%)** | **Comparative Example 1** | **Example 1** | **Example 2** | **Example 3** | **Example 4** | **Example 5** |
|---|---|---|---|---|---|---|
| **Soy milk** | **70** | **70** | **70** | **70** | **70** | **70** |
| **Plant fats and oils** | **1** | **1** | **1** | **1** | **1** | **1** |
| **Sugar** | **1.3** | **1.3** | **1.3** | **1.3** | **1.3** | **1.3** |
| **Water** | **27.7** | **27.685** | **27.67** | **27.66** | **27.65** | **27.6** |
| **Protein material** | **-** | **0.015** | **0.03** | **0.04** | **0.05** | **0.1** |
| **Total** | **100** | **100** | **100** | **100** | **100** | **100** |
| **First foam height (mm)** | **42** | **45** | **50** | **52** | **54** | **53** |
| **Second foam height (mm)** | **32** | **33** | **38** | **39** | **38** | **38** |
| **Foaming stability (%)** | **76.2** | **73.3** | **76.0** | **75.0** | **70.4** | **71.7** |

As shown in Table 1, it was confirmed that the soymilk for foaming according to the present embodiment prepared using the protein material has good foaming property and foaming stability.

### (Examples 6 to 9) Examination of amount of fats and oils added

Soy milks for foaming were prepared in the same manner as in Example 1, except that an amount of the plant fats and oils added was changed to a range of 0.03 to 5% according to the formulation in Table 2. The foamed soy milk obtained from the prepared soy milk for foaming was evaluated. Results are shown in Table 2.

### (Table 2)

**Table 2**

| **Formulation (%)** | **Example 6** | **Example 7** | **Example 8** | **Example 9** |
|---|---|---|---|---|
| **Soy milk** | **70** | **70** | **70** | **70** |
| **Plant fats and oils** | **0.3** | **1** | **3** | **5** |
| **Sugar** | **1.3** | **1.3** | **1.3** | **1.3** |
| **Water** | **28.35** | **27.65** | **25.65** | **23.65** |
| **Protein material** | **0.05** | **0.05** | **0.05** | **0.05** |
| **Total** | **100** | **100** | **100** | **100** |
| **First foam height (mm)** | **47** | **48** | **63** | **70** |
| **Second foam height (mm)** | **35** | **35** | **46** | **48** |
| **Foaming stability (%)** | **74.5** | **72.9** | **73.0** | **68.6** |

As shown in Table 2, even when the amount of the fats and oils added was set to 5%, measurement results showed good foaming property and foaming stability.

### (Examples 10 to 13, Comparative Examples 2 and 3) Examination of soy milk ratio

Examinations made so far have confirmed the foaming property and foaming stability of the soy milk for foaming containing a 70% soy milk solution. The extent to which a decrease in soy milk ratio affects the foaming property and foaming stability was examined. Therefore, the soy milk ratio was set in a range of 5% to 90%.

### (Table 3)

**Table 3**

| **Formulation (%)** | **Comparative Example 2** | **Comparative Example 3** | **Example 10** | **Example 11** | **Example 12** | **Example 13** |
|---|---|---|---|---|---|---|
| **Soy milk** | **5** | **10** | **25** | **45** | **70** | **90** |
| **Plant fats and oils** | **1** | **1** | **1** | **1** | **1** | **1** |
| **Sugar** | **1.3** | **1.3** | **1.3** | **1.3** | **1.3** | **1.3** |
| **Water** | **92.65** | **87.65** | **72.65** | **52.65** | **27.65** | **7.65** |
| **Protein material** | **0.05** | **0.05** | **0.05** | **0.05** | **0.05** | **0.05** |
| **Total** | **100** | **100** | **100** | **100** | **100** | **100** |
| **First foam height (mm)** | **23** | **42** | **56** | **62** | **54** | **58** |
| **Second foam height (mm)** | **13** | **24** | **40** | **42** | **38** | **39** |
| **Foaming stability (%)** | **56.5** | **57.1** | **71.4** | **67.7** | **70.4** | **67.2** |

As shown in Table 3, it was confirmed that when the soy milk ratio is 10% or less, the foaming property and foaming stability decrease. It was confirmed that when the soy milk ratio is at least 25% or more, foaming soy milk having good foaming property and foaming stability can be obtained.

### (Examples 14 and 15) Examination of other plant milks

The foaming property and foaming stability of the plant milk for foaming, including almond milk or oat milk as plant milks other than soy milk, were examined. The plant milks for foaming were obtained in the same manner as in Example 1, except that almond milk or oat milk was used instead of soy milk based on the formulation in Table 4. The foaming property and foaming stability of each foamed plant milk were evaluated in the same manner as in Example 1.

As the almond milk, "thick almond milk, sugar-free" (produced by Tsukuba Dairy Products Co., Ltd., protein content: 3.6%) was used. The oat milk used was prepared in the following manner. First, 700 parts of water and 0.1 parts of α-amylase were added to 100 parts of oat flour. The resulting mixture was subjected to the enzyme treatment at 60°C for 30 minutes. The oat milk (protein content: 0.7%) was obtained through solid-liquid separation by centrifugation and sterilization treatment.

### (Table 4)

**Table 4**

| **Formulation (%)** | **Example 14** | **Example 15** |
|---|---|---|
| **Almond milk** | **70** | **-** |
| **Oat milk** | **-** | **70** |
| **Plant fats and oils** | **1** | **1** |
| **Sugar** | **1.3** | **1.3** |
| **Water** | **27.65** | **27.65** |
| **Protein material** | **0.05** | **0.05** |
| **Total** | **100** | **100** |
| **First foam height (mm)** | **74** | **50** |
| **Second foam height (mm)** | **57** | **37** |
| **Foaming stability (%)** | **77.0** | **74.0** |

As shown in Table 4, it was confirmed that the foamed plant milk having good foaming property and foaming stability could be prepared even when the almond milk or the oat milk was used.

The foregoing detailed description has been presented for the purposes of illustration and description. Many modifications and variations are possible in light of the above teaching. It is not intended to be exhaustive or to limit the subject matter described herein to the precise form disclosed. Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims appended hereto.

## Claims

1. A plant milk for foaming, comprising a plant milk and a protein material having following properties (A) and (B):
(A) after a 20 mass% aqueous solution of the protein material in terms of crude protein contained in the protein material is heated at 80°C for 30 minutes, the aqueous solution has a viscosity of less than 100,000 mPa·s at 25°C; and
(B) the protein material has a 0.22 M TCA solubilization rate of 10% to 95%.

2. The plant milk for foaming according to claim 1, wherein the viscosity is 10,000 mPa·s or less in the property (A).

3. The plant milk for foaming according to claim 1, wherein the 0.22 M TCA solubilization rate of the protein material is 30% to 95% in the property (B).

4. The plant milk for foaming according to claim 1, wherein
the viscosity is 10,000 mPa·s or less in the property (A), and
the 0.22 M TCA solubilization rate of the protein material is 30% to 95% in the property (B).

5. A plant milk beverage having foamed plant milk prepared by foaming the plant milk for foaming according to any one of claims 1 to 4 placed on top of the plant milk beverage.

6. A method for producing a plant milk for foaming, the method comprising emulsifying a plant milk and a raw material containing a protein material having following properties (A) and (B):
(A) after a 20 mass% aqueous solution of the protein material in terms of crude protein contained in the protein material is heated at 80°C for 30 minutes, the aqueous solution has a viscosity of less than 100,000 mPa·s at 25°C; and
(B) the protein material has a 0.22 M TCA solubilization rate of 10% to 95%.

7. A method for producing a foamed plant milk, the method comprising foaming the plant milk for foaming according to any one of claims 1 to 4.

8. A method for foaming a plant milk, the method comprising foaming the plant milk for foaming according to any one of claims 1 to 4.
